# DEMANDE DE BREVET EUROPEEN

(11) **EP 2 000 181 A1**
(43) Date de publication de la demande: **10.12.2008**
(21) Numéro de dépôt: 08305227.4
(22) Date de dépôt: 03.06.2008
(51) Int. Cl.: A63C 5/12, B29C 44/12, B29C 59/10

(54) **Planche de glisse sur neige et procédé de fabrication d'une telle planche**

(30) Priorité: 07.06.2007 FR 0755579
(71) Demandeur: Skis Dynastar, 74700 Sallanches (FR)
(72) Inventeur: Christoud, M. Jacky, 38620 Saint Cassien (FR); Monnet, M. Thierry, 38140 Izeaux (FR); Cassiba, Emmanuel, 74330 Sillingy (FR)
(74) Mandataire: Palix, Stéphane

(57) **Abrégé**

Une planche de glisse sur neige comporte au moins un renfort (11A) comprenant une structure textile (12B) dans une matrice durcie. Une couche perméable (10A, 10B) de freinage d'un matériau alvéolaire en expansion (17) recouvre une face proximale (16) de ladite structure textile (12B) du renfort (11A). Entre les ensembles inférieur (2) et supérieur (3), la planche de ski comporte un noyau central qui est bordé par la couche perméable (10A, 10B) et qui est au moins en partie fait d'un matériau alvéolaire expansé (17), compatible chimiquement avec la matrice du renfort (11A) et durci.

## Description

### DOMAINE TECHNIQUE

La présente invention concerne une planche de glisse sur neige, telle qu'un ski ou un surf, dont un noyau contient un matériau alvéolaire résultant de l'expansion d'un mélange réactionnel injecté.

L'invention concerne également un procédé de fabrication d'une telle planche.

### TECHNIQUES ANTERIEURES :

Un ski, un surf ou une autre planche de glisse sur neige doit être conçu en prenant en compte plusieurs contraintes, dont certaines peuvent être difficiles à concilier entre elles. Parmi ces contraintes, il y a notamment la masse et la rigidité de la planche de glisse, ainsi que la possibilité de fabriquer cette planche d'une manière aussi simple et économique que possible.

Plusieurs solutions élaborées pour concilier au mieux de telles contraintes ont vu le jour. L'une d'entre elles consiste à augmenter au moins localement la rigidité de la planche en y intégrant des renforts mécaniques de diverses natures. Ces renforts peuvent notamment se présenter sous la forme de structures textiles qui sont imprégnées de résine durcie et qui comprennent des fibres tressées ou non, tissées ou non, orientées ou non selon une ou plusieurs directions et pouvant être des fibres de verre ou autres.

Plusieurs procédés sont classiquement mis en oeuvre pour fabriquer une planche de glisse en y intégrant un ou plusieurs renforts à structure textile imprégnée de résine. Dans l'un d'eux, on place dans un moule divers éléments qui sont destinés à faire partie de la planche de glisse et qui se répartissent en un ensemble inférieur et un ensemble supérieur. Entre ces ensembles inférieur et supérieur, on injecte ensuite un mélange réactionnel qui réagit en s'expansant et en formant un noyau alvéolaire de polyuréthane. Une fois durci, ce noyau lie les différents éléments placés dans le moule avant l'injection du mélange réactionnel. Au moins un renfort à structure textile imprégnée de résine époxy peut être au nombre de ces éléments. Ce renfort peut être placé dans le moule après qu'a polymérisé la résine époxy imprégnant sa structure textile. Lorsque tel est le cas, celle des deux faces du renfort destinée à être au contact du noyau alvéolaire expansé doit être poncée avant la mise en place de ce renfort dans le moule. Il s'agit là d'une opération additionnelle qui complique la fabrication de la planche de glisse, mais sans laquelle la fixation du noyau alvéolaire de polyuréthane sur le renfort est insuffisante.

Afin de pouvoir supprimer l'étape additionnelle de ponçage, il a été imaginé de placer le renfort dans le moule alors que la résine époxy de ce renfort n'est pas ou qu'en partie polymérisée. Dans ce cas, la résine époxy du renfort est durcie dans le moule seulement après qu'a eu lieu l'expansion du noyau alvéolaire de polyuréthane. Toutefois, en l'absence de mesures particulières, des réactions chimiques parasites interviennent entre les composants de la mousse de polyuréthane et ceux de la résine époxy. Là où ces réactions parasites ont lieu, se trouvent ensuite des zones de fragilité et de délaminage où le matériau alvéolaire et la résine sont mal solidarisés l'un à l'autre.

Dans le document EP-0 861 681, il est proposé d'empêcher les réactions chimiques parasites évoquées précédemment en interposant une couche intercalaire en matériau non tissé entre le renfort et le noyau de matériau alvéolaire. Cette couche intercalaire réalise une étanchéité pour la mousse de polyuréthane en expansion, qui la pénètre partiellement, sans la traverser, et donc sans venir au contact de la résine du renfort. Du côté du renfort, la résine de celui-ci pénètre également dans la couche intercalaire de manière à s'y ancrer. Le choix du matériau constitutif de la couche intercalaire est d'autant plus délicat à effectuer qu'il est difficile d'obtenir un fonctionnement homogène de la couche intercalaire sur toute la longueur de la planche de glisse.

Une autre solution se basant sur l'interposition d'une étanchéité entre le renfort et le matériau alvéolaire du noyau est décrite dans le document FR-2 654 670. Dans cette solution, le noyau s'expanse à l'intérieur d'une gaine étanche et élastique, qui le sépare du ou des renforts. Lors de l'expansion du noyau, la gaine peut s'étirer de manière non homogène, ce dont il peut résulter un positionnement imprécis d'éléments internes du ski. En outre, la gaine est faite d'un matériau élastique qui induit un amortissement et qui, de ce fait, influe sur le comportement général de la planche de glisse.

Dans chacun des documents WO-2006/082070 et DE-43 19 245, il est décrit une planche de glisse dont un noyau résulte de l'expansion d'un matériau alvéolaire et qui comporte en outre un renfort interne possédant une structure de grille. Ce renfort interne est déjà rigide et se laisse traverser par le matériau alvéolaire lorsque celui-ci s'expanse. Pendant l'expansion du matériau alvéolaire, le renfort interne reste immobile dans la solution proposée par WO-2006/082070. Il est entraîné directement par le matériau alvéolaire dans la solution proposée par DE-43 19 245.

L'invention a au moins pour but de permettre une réduction du coût de fabrication d'une planche de glisse sans qu'il s'ensuive un risque de défaut conséquent dans cette planche de glisse.

### EXPOSE DE L'INVENTION

Selon l'invention, ce but est atteint grâce à une planche de glisse sur neige, comportant au moins des carres et une semelle constitutives d'un ensemble inférieur, une couche supérieure de protection constitutive d'un ensemble supérieur, ainsi qu'au moins un renfort comprenant une structure textile dans une matrice durcie, caractérisée en ce qu'une couche perméable de freinage d'un matériau alvéolaire en expansion recouvre au moins en partie une face proximale de ladite structure textile du renfort et en ce qu'entre les ensembles inférieur et supérieur, la planche de ski comporte un noyau qui est bordé par la couche perméable et qui est au moins en partie fait d'un matériau alvéolaire compatible chimiquement avec la matrice du renfort, expansé et durci.

La couche de freinage est perméable et peut être traversée par le matériau alvéolaire du noyau lors de son expansion. Elle n'a donc pas pour rôle de réaliser une étanchéité. Du fait de sa perméabilité, elle ne peut toutefois être traversée par le matériau alvéolaire en expansion qu'une fois que ce matériau exerce une poussée suffisante sur une de ses deux faces. Cette poussée est à même de placer correctement le renfort et/ou de le plaquer dans sa position définitive. Grâce à la couche de freinage, le matériau alvéolaire en expansion peut donc exercer une telle poussée.

Avantageusement, le matériau alvéolaire traverse la couche perméable et est en contact avec la matrice du renfort. Il s'ensuit une solidarisation intime et robuste du noyau et du renfort dans la mesure où le matériau constitutif du premier est compatible chimiquement avec la matrice du second. Au sens où on l'entend ici, des matériaux compatibles chimiquement sont à même de se lier chimiquement ensemble de manière robuste, à l'inverse du polyuréthane non polymérisé et de l'époxy non polymérisé dont la mise en contact s'accompagne des réactions parasites évoquées précédemment et conduisant à la présence de zones de fragilité.

Avantageusement, ledit matériau alvéolaire traverse au moins localement le renfort, depuis le noyau jusqu'à au moins un interstice, et comble cet interstice qui se trouve du côté d'une face distale du renfort, qui peut notamment correspondre à une forme extérieure du ski et jusqu'au fond duquel n'a pas pu pénétrer le renfort. Ainsi, l'interstice comblé ne forme pas une zone de fragilité, contrairement à ce qu'il en serait s'il était resté vide.

Avantageusement, la matrice du renfort dans le ski fini est constituée majoritairement d'une résine distincte du matériau alvéolaire du noyau. Tel est le cas lorsque la structure textile du renfort est préimprégnée de cette résine lors de sa mise en place dans un moule, préalablement à l'injection d'un mélange réactionnel réagissant pour former le matériau alvéolaire en expansion.

Avantageusement, le matériau alvéolaire est de la mousse de polyuréthane, la matrice du renfort étant à base de polyuréthane. Il s'agit d'une manière préférée d'obtenir la compatibilité chimique entre le matériau alvéolaire et la matrice du renfort.

Avantageusement, ladite couche perméable est faite de mousse à cellules ouvertes. Une épaisseur d'une telle mousse s'est avéré remplir de manière très satisfaisante le rôle de frein pour le matériau alvéolaire en expansion.

Avantageusement, le noyau contient un lacis à trois dimensions de répartition d'écoulement. Ce lacis intervient lors de la formation de ce noyau, en améliorant sa répartition.

L'invention concerne également un procédé comprenant une étape dans laquelle :
a) dans un moule, on place au moins des carres et une semelle constitutives d'un ensemble inférieur de la planche de glisse, une couche supérieure de protection constitutive d'un ensemble supérieur de la planche de glisse, ainsi qu'au moins une structure textile destinée à faire partie d'un renfort,
   caractérisé en ce que durant l'étape a), on place également dans le moule au moins une couche perméable de freinage d'un matériau alvéolaire en expansion, de telle manière que cette couche perméable de freinage recouvre une face proximale de la structure textile, et en ce que, après l'étape a), le procédé comporte au moins des étapes dans lesquelles :
b) dans un espace intérieur bordé par la couche perméable, on injecte un mélange réactionnel réagissant en s'expansant sous forme dudit matériau alvéolaire,
c) on laisse ou on fait durcir en une même opération, d'une part, une matrice qui est compatible chimiquement avec ledit matériau alvéolaire, qui imprègne la structure textile et qui est constitutive dudit renfort, ainsi que, d'autre part, ledit matériau alvéolaire sous forme d'une partie au moins d'un noyau entre les ensembles inférieur et supérieur.

Avantageusement, le matériau alvéolaire en expansion traverse ladite couche perméable.

Avantageusement, le matériau alvéolaire en expansion met en place au moins ladite structure textile en exerçant une poussée sur la couche perméable. Ainsi, le renfort est correctement placé contre au moins un élément de la planche de glisse, au lieu d'occuper une place aléatoire dans le noyau.

Avantageusement, dans l'étape b), le matériau alvéolaire en expansion presse le renfort contre une partie de l'un au moins des ensembles inférieur et supérieur, en exerçant une poussée sur la couche perméable. Ainsi, le renfort est plaqué dans sa position définitive avant le durcissement de sa matrice, contre ce à quoi cette matrice doit se lier.

Avantageusement, lorsque la structure textile est placée dans le moule à l'étape a), cette structure textile est préimprégnée d'une résine au moins en partie non polymérisée, avec laquelle ledit matériau alvéolaire est compatible chimiquement.

Avantageusement, dans l'étape b), le matériau alvéolaire en expansion traverse la couche perméable jusqu'à entrer en contact avec la résine dont est préimprégnée la structure textile.

Avantageusement, lorsque la structure textile est placée dans le moule à l'étape a), cette structure textile est sèche, tandis que dans l'étape b), le matériau alvéolaire en expansion traverse la couche perméable jusqu'à imprégner entièrement ladite structure textile.

Avantageusement, dans l'étape b), une face distale de la structure textile est plaquée sauf au niveau d'au moins un interstice qui se trouve du côté de cette face distale, qui peut notamment correspondre à une forme extérieure du ski, jusqu'au fond duquel n'a pas pu pénétrer le renfort et que comble du matériau alvéolaire traversant la structure textile vers cet interstice.

Avantageusement, le mélange injecté à l'étape b) s'expanse en une mousse de polyuréthane, la matrice du renfort étant à base de polyuréthane.

Avantageusement, ladite couche perméable est faite de mousse compressible à cellules ouvertes ou d'un non-tissé de fibres agglomérées selon une densité prédéterminée, ou bien encore d'une structure poreuse où des fibres sont imprégnées d'une substance polymérisée.

Avantageusement, la couche perméable et la structure textile sont déjà liées ensemble à l'étape a). Leur mise en place dans le moule est alors facilitée. En particulier, la couche perméable et la structure textile liées forment ensemble un complexe qui présente une légère raideur en flexion. Grâce à cette raideur, ladite couche perméable et la structure textile peuvent garder d'elles-mêmes une concavité tournée vers le bas, au-dessus dudit espace intérieur, après avoir été courbées ensemble élastiquement selon une direction transversale, de manière à prendre globalement la forme d'une goulotte, puis mises en place ainsi courbées dans le moule de manière à ensuite se bloquer d'elles-mêmes latéralement contre deux côtés, dans l'étape a).

Avantageusement, un collage réalisé antérieurement à l'étape a) lie ladite couche perméable et la structure textile lorsqu'on place cette couche perméable et la structure textile dans le moule, à l'étape a). A l'inverse de coutures, un tel collage ne crée pas des passages par lesquels le matériau alvéolaire en expansion pourrait trop aisément traverser le complexe.

Avantageusement, dans l'étape a), on place dans le moule un lacis à trois dimensions de répartition de l'écoulement du mélange réactionnel, au niveau dudit espace intérieur. Ce lacis peut participer au maintien du complexe dans une forme générale de goulotte, au dessus de l'espace intérieur.

### DESCRIPTION SOMMAIRE DES FIGURES

L'invention sera bien comprise à la lecture de la description qui va suivre, donnée uniquement à titre d'exemple et faite en se référant aux dessins annexés, parmi lesquels :
- la figure 1 est une coupe transversale d'un moule non fermé dans lequel ont été placés les ensembles inférieur et supérieur d'une planche de glisse conforme à l'invention ;
- la figure 2 est une vue schématique et partielle, en perspective, d'un complexe souple dont un exemplaire fait partie de chacun des sous-ensembles inférieur et supérieur visibles à la figure 1 ;
- la figure 3 est une vue analogue à la figure 1 et illustre une étape de la fabrication de la planche de glisse dans le moule de cette figure 1, selon un procédé conforme à l'invention ;
- la figure 4 est un agrandissement d'une loupe analogue à la loupe VII tracée à la figure 6 et illustre la même étape que la figure 3 ;
- la figure 5 est une vue analogue à la figure 4 et illustre une étape consécutive de celle de cette figure 4 ;
- la figure 6 est une coupe qui est analogue à celle de la figure 1 et sur laquelle la planche de glisse en cours de fabrication à la figure 3 est prête à être démoulée ; et
- la figure 7 est un agrandissement de la loupe VII tracée à la figure 6.

Sur ces figures, les proportions ne sont pas respectées dans un souci de clarté.

### MANIERE POSSIBLE DE REALISER L'INVENTION

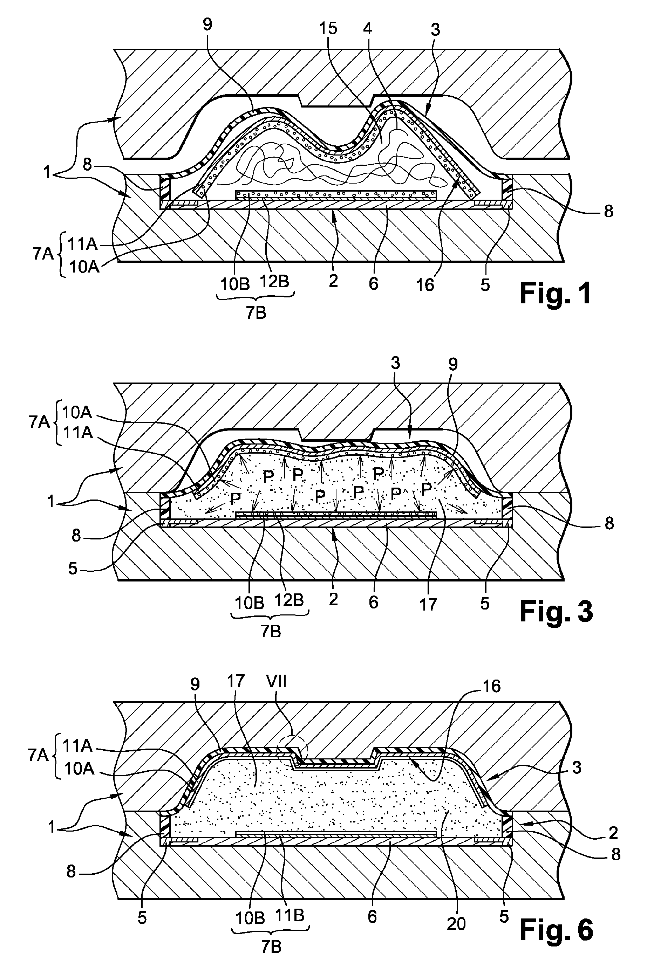

Sur la figure 1 est représenté un moule 1 en deux parties, dans le volume intérieur duquel ont été placés un ensemble inférieur 2 et un ensemble supérieur 3. Un lacis 4 de fils en polymère a également été disposé à l'intérieur du moule 1, entre les ensembles 2 et 3.

Dans l'exemple représenté, l'ensemble inférieur 2 comporte deux carres gauche et droite 5, ainsi qu'une semelle inférieure 6 qui relie ces deux carres 5 l'une à l'autre et sur laquelle repose un complexe 7B. Un élément longitudinal de renforcement 8 destiné à former un champ de la future planche de glisse surmonte chaque carre 5.

L'ensemble supérieur 3 comporte une couche décorative de protection extérieure 9, ainsi qu'un complexe 7A.

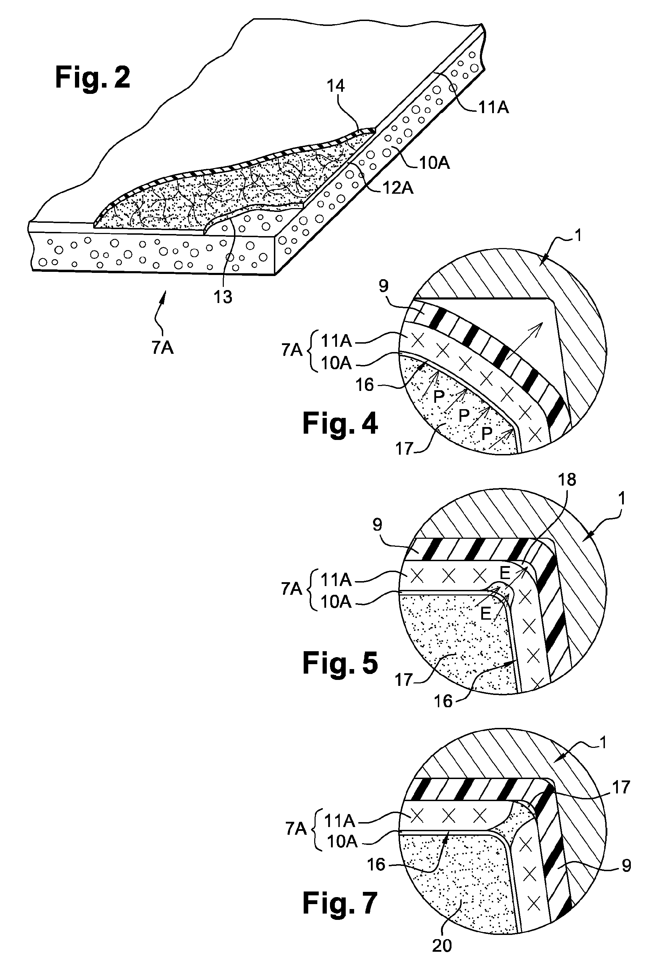

Chacun des complexes 7A et 7B se présente sous la forme d'une bande flexible, voire souple. Le complexe 7A est représenté seul à la figure 2. Ainsi qu'on peut le voir sur cette figure 2, il comprend deux couches superposées dont une, référencée 10A, est faite de mousse perméable, à cellules ouvertes. L'autre couche 11A du complexe 7A est un renfort encore non rigide et comprend une structure textile de renforcement 12A liée par un collage 13 à la couche de mousse 10A et imprégnée d'une résine mécanisante de polyuréthane 14, voire noyée dans cette résine 14 qui est au moins en partie non polymérisée, c'est-à-dire totalement non polymérisée ou partiellement polymérisée.

La structure textile 12A présente la forme d'une nappe fibreuse, dont les fibres peuvent être tressées ou non, tissées ou non, ou bien regroupées de manière à former des bandes pouvant elles aussi être tissées. La structure textile 12A peut également être un non tissé. Elle peut comprendre divers types de fibres, en particulier des fibres de verre, des fibres de carbone ou bien des fibres d'aramide. Notamment parce que sa couche de mousse 10A et sa structure textile 12A sont liées de manière à ne pas pouvoir glisser l'une par rapport à l'autre, le complexe 7A présente une certaine raideur en flexion même s'il demeure globalement souple. Grâce à cette raideur, il peut être positionné comme à la figure 1 où il s'est bloqué de lui-même latéralement contre deux côtés formés par les éléments longitudinaux 8 et où il garde de lui-même une concavité tournée vers le bas, au dessus d'un espace intérieur libre 15.

Le complexe 7B comporte une structure textile de renforcement 12B analogue à la structure textile 12A. De préférence, cette structure textile 12A est préimprégnée de résine 14, comme la structure textile 12A, lors de sa mise en place dans le moule 1. Il peut toutefois en être autrement, ce qui est le cas retenu, par souci de proposer un exposé large, dans l'exemple représenté où la structure textile 12B est sèche, c'est-à-dire non imprégnée de résine 14, lors de la mise en place du complexe 7B dans le moule 1. Pour le reste, le complexe 7B est semblable au complexe 7A. Sur les dessins annexés, sa couche de mousse est référencée 10B.

Le complexe 7A est placé dans le moule 1 de telle manière que sa couche de mousse 10A se trouve du côté de l'espace libre 15. En d'autres termes, cette couche de mousse 10A recouvre la face proximale 16 du renfort 11A, c'est-à-dire sa face tournée vers l'espace libre 15. De même, le complexe 7B a été placé dans le moule 1 de telle manière que sa couche de mousse 10B se trouve du côté de l'espace libre 15, où se trouve le lacis 4.

Une fois le moule 1 refermé, on injecte un mélange réactionnel dans l'espace libre 15, où le lacis 4 divise et répartit les écoulements en résultant. Le mélange réactionnel injecté dans le moule 1, entre les complexes 7A et 7B, réagit en s'expansant en un matériau alvéolaire 17 qui, dans l'exemple décrit, est plus précisément une mousse de polyuréthane. Du fait notamment de son expansion, ce matériau alvéolaire 17 progresse le long de l'espace libre 15 et il rencontre les couches de mousse 10A et 10B, puis exerçe sur elles une poussée matérialisée par les flèches P à la figure 3, du fait qu'il lui est difficile de traverser ces couches de mousse 10A et 10B.

La mousse des couches 10A et 10B est choisie de manière à freiner sensiblement le matériau alvéolaire 17 qui la pénètre. De ce fait, avant de faire passer du matériau alvéolaire 17 à travers la couche de mousse 10A, la poussée P s'exerçant sur cette couche 10A positionne le complexe 7A contre la couche de protection 9, puis met en place cette dernière contre la paroi interne du moule 1, ce qu'illustrent les figures 3 et 4.

Le matériau alvéolaire 17 en expansion traverse ensuite la couche de mousse 10A et vient au contact de la résine 14, avec laquelle il est compatible chimiquement.

Sur la figure 5, la poussée P a plaqué le complexe 7A contre la couche de protection 9, sauf au niveau d'une région resserrée qui correspond à une forme extérieure du ski et où il subsiste un interstice vide 18 entre la face distale du complexe 7A et la couche de protection 9. Au niveau de cet interstice 18, du matériau alvéolaire 17 traverse le renfort 11 A vers l'extérieur, ce que symbolisent les flèches E à la figure 5. Ensuite, du matériau alvéolaire 17 comble l'interstice 18.

La poussée P presse également le produit textile 12B contre la semelle 6, en s'exerçant sur la couche 10B. Ensuite seulement, le matériau alvéolaire 17 en expansion traverse la couche 10B puis imprègne la structure textile 12B.

A l'issue de l'expansion du matériau alvéolaire 17, les éléments constitutifs des ensembles inférieur et supérieur sont correctement positionnés et la situation est celle illustrée par les figures 6 et 7.

La résine 14 et le matériau alvéolaire 17 dans l'espace libre 15, au niveau de la structure textile 12B et dans l'interstice 18 sont alors polymérisés ou autrement durcis en une même opération, lors de laquelle un chauffage peut leur être appliqué. Suite à cela, la résine 14 et le matériau 17 imprégnant la structure textile 12A forment respectivement la matrice du renfort 11A et la matrice d'un renfort inférieur 11B, tandis que le matériau alvéolaire 17 se trouvant entre ces renforts 11A et 11B forme un noyau central 20, durci. Les renforts 11A et 11B sont solidement unis à ce noyau 20 dans la mesure où leurs matrices sont à base de polyuréthane et sont donc compatibles chimiquement avec le matériau alvéolaire du noyau 20, qui est lui-même fait d'une mousse de polyuréthane. En d'autres termes, il existe une continuité chimique entre le noyau 20 et les renforts 11A et 11B.

Malgré la compatibilité chimique du noyau 20 et des matrices des renforts 11A et 11B, on a prévu les couches de mousse 10A et 10B. Ces dernières sont traversées par le matériau alvéolaire 17 en expansion et leur fonction n'est pas de réaliser une étanchéité, mais de permettre à la poussée P de placer correctement et/ou de plaquer le renfort 11A contre la couche de protection 9 et le renfort 11B contre la semelle 6. En l'absence de la couche de mousse ou couche de freinage 10A, le matériau alvéolaire 17 pourrait traverser le renfort 11A sans l'avoir au préalable correctement positionné.

Par ailleurs, tous les interstices du type de celui référencé 18 sont comblés et aucun d'entre eux ne reste vide et susceptible de former une zone de fragilité où la couche de protection 9 ne serait pas unie au renfort 11A.

L'invention ne se limite pas au mode de réalisation décrit précédemment. En particulier, la structure textile 12B peut être préimprégnée comme la structure textile 12A lors de sa mise en place dans le moule 1. A l'inverse, la structure textile 12A peut être sèche lors de la mise en place du complexe 7A dans le moule 1.

Par ailleurs, la couche de mousse 10A et la structure textile 12A du complexe 7A peuvent être dissociées, c'est-à-dire indépendantes l'une de l'autre, lors de leurs mises en place dans le moule. Il peut en être de même de la couche de mousse 10B et de la structure textile 12B du complexe 7B.

En outre, la ou les couches de freinage du matériau alvéolaire en expansion 17 peuvent être faites non pas de mousse, mais d'un autre matériau de perméabilité calibrée tel qu'un non-tissé par exemple. Ce non-tissé peut être fait de fibres, par exemple de fibres de polyester, qui sont agglomérées selon une densité prédéterminée et choisie pour obtenir la perméabilité voulue. La couche de freinage du matériau alvéolaire en expansion peut également être une structure poreuse où des fibres sont imprégnées d'une substance fixée par exemple par polymérisation. Ces fibres imprégnées peuvent être celles d'un non-tissé tel qu'un voile de support, qui est fixé par couture ou de toute autre manière appropriée à la structure textile de renforcement 12A ou 12B de manière à la porter et en maintenir la cohérence. La quantité de substance d'imprégnation est déterminée pour obtenir la perméabilité voulue.

## Revendications

1. Planche de glisse sur neige, comportant au moins des carres (5) et une semelle (6) constitutives d'un ensemble inférieur (2), une couche supérieure de protection (9) constitutive d'un ensemble supérieur (3), ainsi qu'au moins un renfort (11A, 11B) comprenant une structure textile (12A, 12B) dans une matrice (14, 17) durcie, **caractérisée en ce qu'**une couche perméable (10A, 10B) de freinage d'un matériau alvéolaire (17) en expansion recouvre au moins en partie une face proximale (16) de ladite structure textile (12A, 12B) du renfort (11A, 11B) et **en ce qu'**entre les ensembles inférieur (2) et supérieur (3), la planche de ski comporte un noyau central (20) qui est bordé par la couche perméable (10A, 10B) et qui est au moins en partie fait d'un matériau alvéolaire (17) compatible chimiquement avec la matrice (14) du renfort (11A, 11B), expansé et durci.

2. Planche de glisse selon la revendication 1, **caractérisée en ce que** le matériau alvéolaire (17) traverse la couche perméable (10A, 10B) et est en contact avec la matrice (14, 17) du renfort (10A, 10B).

3. Planche de glisse selon la revendication 2, **caractérisée en ce que** ledit matériau alvéolaire (17) traverse au moins localement le renfort (11A), depuis le noyau (20) jusqu'à au moins un interstice (18), et comble cet interstice (18) qui se trouve du côté d'une face distale du renfort (11A).

4. Planche de glisse selon l'une quelconque des revendications précédentes, **caractérisé en ce que** la matrice du renfort (11A) est constituée majoritairement d'une résine (14) distincte du matériau alvéolaire (17) du noyau (20).

5. Planche de glisse selon l'une quelconque des revendications précédentes, **caractérisée en ce que** le matériau alvéolaire est de la mousse de polyuréthane (17), la matrice (14, 17) du renfort (11A, 11B) étant à base de polyuréthane.

6. Planche de glisse selon l'une quelconque des revendications précédentes, **caractérisée en ce que** le noyau central (20) contient un lacis à trois dimensions (4) de répartition d'écoulement.

7. Procédé de fabrication d'une planche de glisse sur neige, ce procédé comprenant une étape dans laquelle :
a) dans un moule (1), on place au moins des carres (5) et une semelle (6) constitutives d'un ensemble inférieur (2) de la planche de glisse, une couche supérieure de protection (9) constitutive d'un ensemble supérieur (3) de la planche de glisse, ainsi qu'au moins une structure textile (12A, 12B) destinée à faire partie d'un renfort (11A, 11B),
***caractérisé* en ce que** durant l'étape a), on place également dans le moule (1) au moins une couche perméable (10A, 10B) de freinage d'un matériau alvéolaire (17) en expansion, de telle manière que cette couche perméable de freinage (10A, 10B) recouvre une face proximale (16) de la structure textile (12A, 12B), et **en ce que**, après l'étape a), le procédé comporte au moins des étapes dans lesquelles :
b) dans un espace intérieur (15) bordé par la couche perméable (10A, 10B), on injecte un mélange réactionnel réagissant en s'expansant sous forme dudit matériau alvéolaire (17),
c) on laisse ou on fait durcir en une même opération, d'une part, une matrice (14) qui est compatible chimiquement avec ledit matériau alvéolaire (17), qui imprègne la structure textile (12A, 12B) et qui est constitutive dudit renfort (11A, 11B), ainsi que, d'autre part, ledit matériau alvéolaire (17) sous forme d'une partie au moins d'un noyau central (20) entre les ensembles inférieur (2) et supérieur (3).

8. Procédé selon la revendication 7, **caractérisé en qu'**on choisit la perméabilité de ladite couche perméable (10A, 10B) de manière que, dans l'étape b), le matériau alvéolaire en expansion (17) traverse ladite couche perméable (10A, 10B).

9. Procédé selon la revendication 8, **caractérisé en ce qu'**on choisit la perméabilité de ladite couche perméable (10A, 10B) de manière que, dans l'étape b), le matériau alvéolaire en expansion (17) mette en place au moins ladite structure textile (12A) en exerçant une poussée (P) sur la couche perméable (10A).

10. Procédé selon l'une quelconque des revendications 8 et 9, **caractérisé en ce qu'**on choisit la perméabilité de ladite couche perméable (10A, 10B) de manière que, dans l'étape b), le matériau alvéolaire en expansion (17) presse le renfort (11A, 11B) contre une partie (6, 9) de l'un au moins des ensembles inférieur (2) et supérieur (3), en exerçant une poussée (P) sur la couche perméable (10A, 10B).

11. Procédé selon l'une quelconque des revendications 7 à 10, **caractérisé en ce que** lorsque la structure textile (12A) est placée dans le moule (1) à l'étape a), cette structure textile (12A) est préimprégnée d'une résine (14) au moins en partie non polymérisée, avec laquelle ledit matériau alvéolaire (17) est compatible chimiquement.

12. Procédé selon la revendication 11 et l'une quelconque des revendications 8 à 10, **caractérisé en ce qu'**on choisit la perméabilité de ladite couche perméable (10A, 10B) de manière que, dans l'étape b), le matériau alvéolaire en expansion (17) traverse la couche perméable (10A) jusqu'à entrer en contact avec la résine (14) dont est préimprégnée la structure textile (12A).

13. Procédé selon l'une quelconque des revendications 8 à 10, **caractérisé en ce que** lorsque la structure textile (12B) est placée dans le moule (1) à l'étape a), cette structure textile (12B) est sèche et **en ce qu'**on choisit la perméabilité de ladite couche perméable (10A, 10B) de manière que, dans l'étape b), le matériau alvéolaire en expansion (17) traverse la couche perméable (10B) jusqu'à imprégner entièrement ladite structure textile (12B).

14. Procédé selon l'une quelconque des revendications 8 à 13, **caractérisé en ce que** dans l'étape b), on laisse une face distale de la structure textile (12A, 12B) être plaquée sauf au niveau d'au moins un interstice (18) qui se trouve du côté de cette face distale et que comble du matériau alvéolaire (17) traversant la structure textile (12A, 12B) vers cet interstice (18).

15. Procédé selon l'une quelconque des revendications 7 à 14, **caractérisé en ce que** le mélange injecté à l'étape b) s'expanse en une mousse de polyuréthane (17), la matrice (14) du renfort (11A, 11B) étant à base de polyuréthane.

16. Procédé selon l'une quelconque des revendications 7 à 15, **caractérisé en ce que** ladite couche perméable (10A, 10B) et la structure textile (12A, 12B) sont déjà liées ensemble à l'étape a).

17. Procédé selon la revendication 16, **caractérisé en ce que** dans l'étape a), ladite couche perméable (10A, 10B) et la structure textile (12A, 12B) sont courbées ensemble élastiquement selon une direction transversale, puis mises en place ainsi courbées dans le moule (1) de manière à ensuite se bloquer d'elles-mêmes latéralement contre deux côtés (8) et garder d'elles-mêmes une concavité tournée vers le bas, au-dessus dudit espace intérieur (15).

18. Procédé selon l'une quelconque des revendications 7 à 17, **caractérisé en ce que** dans l'étape a), on place dans le moule (1) un lacis à trois dimensions (4) de répartition de l'écoulement du mélange réactionnel, au niveau dudit espace intérieur (15).
